# EUROPEAN PATENT SPECIFICATION

(11) **EP 3 422 799 B1**
(45) Date of publication and mention of the grant of the patent: **05.08.2020**
(21) Application number: 18179436.3
(22) Date of filing: 25.06.2018
(51) Int. Cl.: H04W 76/15, H04W 36/28

(54) **LTE-NR INTERWORKING PROCEDURE FOR SCG SPLIT BEARER CONFIGURATIONS**
LTE-NR INTERWORKING-VERFAHREN FÜR SCG-SPLIT-TRÄGER-KONFIGURATIONEN
PROCÉDURE D'INTERFONCTIONNEMENT LTE-NR POUR DES CONFIGURATIONS DE PORTEUSE PARTAGÉE SCG

(30) Priority: 27.06.2017 IN 201741022417
(43) Date of publication of application: 02.01.2019
(73) Proprietor: Nokia Solutions and Networks Oy, 02610 Espoo (FI)
(72) Inventor: SELVAGANAPATHY, Srinivasan, 560117 Bangalore (IN); KORDYBACH, Krzysztof, 24-100 Pulawy (PL)
(74) Representative: Nokia EPO representatives

(56) References cited:
- WO-A1-2016/117979
- WO-A1-2018/174683
- "Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP DRAFT; 36300-E30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 June 2017 (2017-06-24), XP051306328, Retrieved from the Internet: URL:http://www.3gpp.org/ftp/tsg_ran/WG2_RL 2/Specifications/201706_final_specs_after_ RAN_76/ [retrieved on 2017-06-24]

## Description

### Technical Field:

The exemplary and non-limiting embodiments relate generally to wireless networks and, more specifically, relates to internetworking procedures in such networks.

### Brief Description of Prior Developments:

A new Work Item (WI) for introduction of 5G radio access was started in 3rd Generation Partnership Project (3GPP) in release 13 (Rel-13). As part of this WI, a new radio interface (NR) which addresses 3 main uses was proposed. The three main uses named are enhanced mobile broadband (eMBB), massive machine type communications (MTC) and Ultra-Reliable Low Latency Communication (URLLC). For initial deployments of NR, tight interworking with existing long term evolution (LTE) nodes is required. For this purpose, the WI for NR included analysis of the possible architecture for LTE NR Interworking. Dual connectivity architecture of LTE was chosen as basis for LTE NR interworking to maximise the reuse of existing specifications.

Certain abbreviations that may be found in the description and/or in the Figures are herewith defined as follows:
- enhanced mobile broadband: eMBB
- gNB: gNodeB
- GPRS: General Packet Radio Service
- GTP: GPRS Tunnelling Protocol
- LTE: Long Term Evolution
- MCG: Master Cell Group
- MeNB: Master ENB
- MTC: machine type communications
- NR: New Radio
- PDCP: Packet Data Convergence Protocol
- RRC: Radio Resource Control
- RCR: RRC Connection Reconfiguration
- SeNB: Secondary ENB
- SGW: Serving GW
- SCG: Secondary Cell Group
- SgNB: Secondary gNB (NR node)

The document WO 2016/17979A1 describes a method and an apparatus for supporting local breakout in dual connectivity architecture.

### BRIEF DESCRIPTION OF THE DRAWINGS:

The invention is defined in the independent claims 1, 12, 14 and 15. The foregoing and other aspects of embodiments of this invention are made more evident in the following Detailed Description, when read in conjunction with the attached Drawing Figures, wherein:
Fig. 1 is a block diagram of one possible and non-limiting example system in which the example embodiments may be practiced;
Fig. 2 is a block diagram illustrating SCG Split bearer option for LTE NR interworking;
Fig. 3 is a signaling diagram illustrating a message sequence for the above implementation option for LTE-NR Interworking procedure for SCG Split bearer Configurations;
Fig. 4 is a block diagram illustrating components associated with an Interworking procedure for SCG Split bearer in an MeNB;
Fig. 5 is a block diagram illustrating components associated with an Interworking procedure for SCG Split bearer in an SgNB;
Fig. 6 shows a method in accordance with example embodiments which may be performed by an apparatus;
Fig. 7 shows another method in accordance with example embodiments which may be performed by an apparatus.

### DETAILED DESCRIPTION OF THE DRAWINGS:

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

In the example embodiments as described herein a method and apparatus provides a LTE-NR Interworking procedure for SCG Split bearer Configurations.

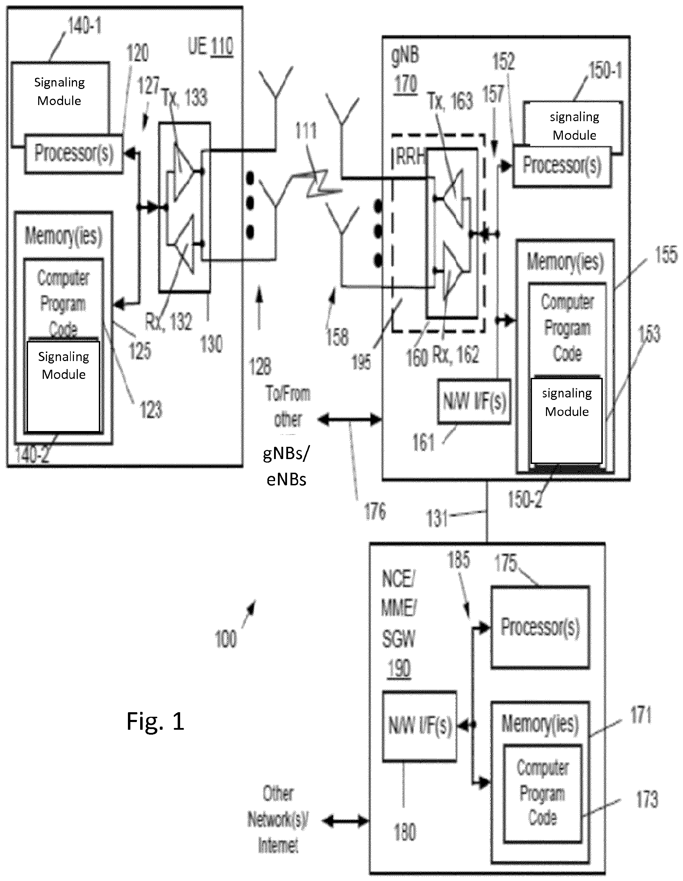

Turning to Fig. 1, this figure shows a block diagram of one possible and non-limiting example system in which the example embodiments may be practiced. In Fig. 1, a user equipment (UE) 110 is in wireless communication with a wireless network 100. A UE is a wireless, typically mobile device that can access a wireless network. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a signaling module 140, comprising one of or both parts 140-1 and/or 140-2, which may be implemented in a number of ways. The signaling module 140 may be implemented in hardware as signaling module 140-1, such as being implemented as part of the one or more processors 120. The signaling module 140-1 may be implemented also as an integrated circuit or through other hardware such as a programmable gate array. In another example, the signaling module 140 may be implemented as signaling module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with gNB 170 via a wireless link 111.

The gNB (NR/5G Node B but possibly an evolved NodeB) 170 is a base station (e.g., for LTE, long term evolution) that provides access by wireless devices such as the UE 110 to the wireless network 100. The gNB 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The gNB 170 includes a signaling module 150, comprising one of or both parts 150-1 and/or 150-2, which may be implemented in a number of ways. The signaling module 150 may be implemented in hardware as signaling module 150-1, such as being implemented as part of the one or more processors 152. The signaling module 150-1 may be implemented also as an integrated circuit or through other hardware such as a programmable gate array. In another example, the signaling module 150 may be implemented as signaling module 150-2, which is implemented as computer program code 153 and is executed by the one or more processors 152. For instance, the one or more memories 155 and the computer program code 153 are configured to, with the one or more processors 152, cause the gNB 170 to perform one or more of the operations as described herein. The one or more network interfaces 161 communicate over a network such as via the links 176 and 131. Two or more gNBs 170 (or gNBs and eNBs) communicate using, e.g., link 176. The link 176 may be wired or wireless or both and may implement, e.g., an X2 interface.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195, with the other elements of the gNB 170 being physically in a different location from the RRH, and the one or more buses 157 could be implemented in part as fiber optic cable to connect the other elements of the gNB 170 to the RRH 195.

It is noted that description herein indicates that "cells" perform functions, but it should be clear that the gNB that forms the cell will perform the functions. The cell makes up part of a gNB. That is, there can be multiple cells per gNB.

The wireless network 100 may include a network control element (NCE) 190 that may include MME (Mobility Management Entity)/SGW (Serving Gateway) functionality, and which provides connectivity with a further network, such as a telephone network and/or a data communications network (e.g., the Internet). The gNB 170 is coupled via a link 131 to the NCE 190. The link 131 may be implemented as, e.g., an S1 interface. The NCE 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the NCE 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, gNB 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Embodiments herein may be implemented in software (executed by one or more processors), hardware (e.g., an application specific integrated circuit), or a combination of software and hardware. In an example of an embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 1. A computer-readable medium may comprise a computer-readable storage medium or other device that may be any media or means that can contain or store the instructions for use by or in connection with an instruction execution system, apparatus, or device, such as a computer.

The current architecture in LTE networks is fully distributed in the radio and fully centralized in the core network. The low latency requires bringing the content close to the radio which leads to local break out and multi-access edge computing (MEC). 5G may use edge cloud and local cloud architecture. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services and augmented reality. In radio communications, using edge cloud may mean node operations to be carried out, at least partly, in a server, host or node operationally coupled to a remote radio head or base station comprising radio parts. It is also possible that node operations will be distributed among a plurality of servers, nodes or hosts. It should also be understood that the distribution of labor between core network operations and base station operations may differ from that of the LTE or even be non-existent. Some other technology advancements probably to be used are Software-Defined Networking (SDN), Big Data, and all-IP, which may change the way networks are being constructed and managed.

Having thus introduced one suitable but non-limiting technical context for the practice of the example embodiments of this invention, the example embodiments will now be described with greater specificity.

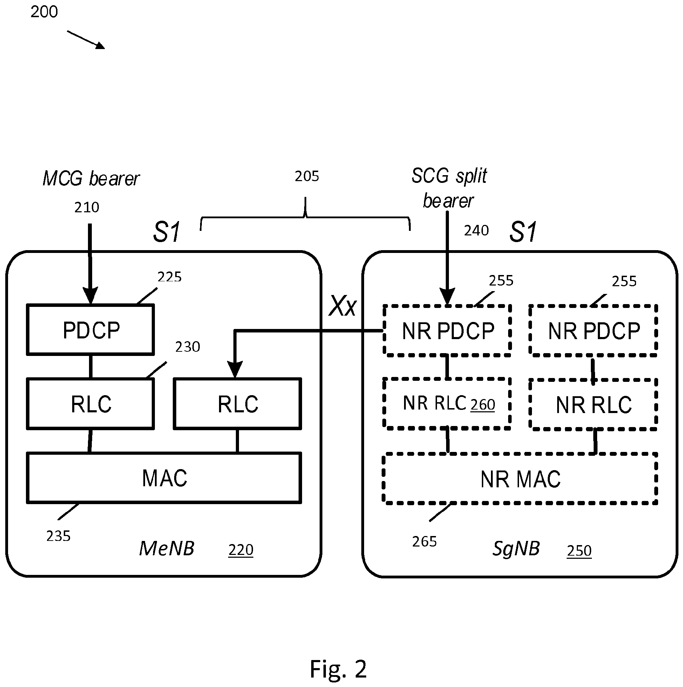

Fig. 2 illustrates an SCG Split bearer option 200 for LTE NR interworking. As shown, the split bearer S1 (205) includes (or is split/divided into) a Master Cell Group (MCG) bearer 210, which may be transmitted via an MeNB 220 (such as an LTE eNB, which may include some similar components to gNB 170 illustrated in Fig. 1, which may be associated with an LTE network), or master node, and a SCG split bearer 240, which may be transmitted via a SgNB 250 (such as a gNB 170, which may correspond to a NR gNB, such as the gNB 170 with components illustrated in Fig. 1, which may be associated with an NR network), or secondary node.

MeNB 220 may include information elements, such as a Packet Data Convergence Protocol (PDCP) 225, Radio Link Control (RLC) 230 and medium access control (MAC) 235.

In instances of LTE NR Interworking scenarios, SgNB 250 may include (or provide) an additional SCG-Configuration Information element which contains NR-RRC container that corresponds to alternative configuration, which may be implemented when MeNB 220 (for example, an LTE eNB) cannot (is unable to) allocate resources for the proposed SCG Split bearer configuration. SgNB 250 may include information elements (which may be adapted to/ designed for an NR network) such as NR PDCP 255, NR

RLC 260 and NR MAC 265. SgNB 250 may also indicate the type of alternative configuration as:

Case 1) Minimum guaranteed bit rate (Min-GBR): The MeNB 220 (for example, LTE eNB) may use a Minimum-GBR (which may have been reserved at MeNB 220 during SgNB-Addition) for split bearer if a requested GBR is not possible.

Case 2) SCG-Split-bearer-Release: MeNB 220 may trigger the SCG-Split bearer release towards UE 110 if the requested GBR is not possible.

For Case 1) the additional SCG-Configuration contains NR-RRC that may correspond to minimum resource allocation at MeNB 220 for the split bearer S1 205. For Case 2) the additional SCG-configuration may correspond to release of the SCG-Split bearer.

The methods and apparatus may provide features and enhancements that are specific to the nature of SgNB 250 (for example, to the nature of 5G radio nodes). For instance, in order to optimise the per-use throughput when data transmission is anchored via SgNB 250 (for example, a 5G node), a bearer type called SCG split bearer may be introduced in addition to SCG bearer and MCG Split bearers of dual connectivity architecture.

In instances of LTE-Dual connectivity, when MeNB 220 decides to configure an E-UTRAN Radio Access Bearer (ERAB) as MCG Split bearer MeNB 220 may first configure the radio bearer for the MCG part of the bearer and request for configuration of the bearer at SCG as part of SN (for example, SeNB or SgNB)-Addition Procedure. In instances in which the resource allocation or configuration at SgNB250 fails, SgNB250 may send this information in SeNB-Addition response. Based on this response, MeNB 220 reconfigures the bearer as MCG and sends final configuration to the UE 110 (now shown in Fig. 2). In instances in which MeNB 220 implements a change in the MCG bearer as MCG-Split bearer which have GBR requirements, MeNB 220 may request for specific Guaranteed Bit Rate (GBR) from SgNB250 for this bearer as part of SN-Addition-Request message. SN-Addition-Request message may be directed to addition of a secondary node such as an NR SgNB, or, in some instances, an LTE SeNB. If the SgNB250 is unable to reserve the required resources for the GBR, SgNB250 may send a SeNB-Addition-Response indicating failure for this bearer. In this case MeNB 220 may not change any configuration and the bearer may continue as MCG bearer.

SCG-Split bearer is a bearer type included in LTE-NR Dual connectivity. This bearer type (SCG-Split bearer) is similar to the MCG-Split bearer with the difference that the S1-UP of the bearer is terminated at SgNB 250 and it is the SgNB 250 that controls the PDCP. For this bearer type, SgNB 250 is responsible for resource allocation and decision on changing the SCG bearer as SCG-Split bearer.

With NR-RRC configuration being sent as transparent container for the SgNB-Addition or SgNB-Modification procedures which may require co-ordination from MeNB 220, the message sequence for the scenarios related to conversion of SCG bearer to SCG-Split bearer may require two successive procedures to handle the resource allocation failures at MeNB 220 for the split bearer.

For example, in the below use case of SgNB Addition Procedure where SgNB 250 determines to configure a GBR bearer as SCG-Split bearer with some resource commitment for the bearer provided by MeNB 220 as part of the split bearer. At a high level below steps are involved:

1) MeNB 220 may send SgNB-Addition-Request proposing some GBR bearers as SCG bearers.

2) SgNB 250 may make a determination (for example, decide) to modify these bearers as SCG-Split bearer so that some resources from MeNB 220 may also be used for this GBR bearer. SgNB 250 may send SgNB-Addition-Response with NR-RRC-Container (containing SCG configuration (config.) that corresponds to the sgNB-Addition-Response which also includes SCG-Split bearer configuration). The message may also include an additional request to MeNB 220 to allocate bearer which may be mapped to the MCG part of the split bearer.

3) In instances in which MeNB 220 can allocate resource for the split bearer, the SgNB Addition procedure may be successful. In this instance, the GBR bearer may be configured as SCG-Split bearer with some resource commitment for the bearer provided by MeNB 220 as part of the split bearer.

4) In instances in which MeNB 220 is unable to allocate resource for the SCG-Split bearer, then the complete procedure may be (be required to be) aborted.

In some instances, a problem of termination of the SgNB Addition procedure may be avoided, if SgNB 250 is allowed to only configure SCG bearer not SCG-Split bearer as part of SgNB-Addition procedure. However, this solution may have some restrictions for SCG-Split bearer establishment. For ERAB to be configured as SCG-Split bearer two steps will be required: 1) SgNB-Addition with SCG bearer; and 2) SgNB-Modification for SCG-Split-bearer configuration which does not contain other configurations.

The methods and apparatus provide a mechanism in which the SCG-Split bearer configuration associated with all LTE-DC procedures are modified to handle the resource allocation failures of SCG-Split bearer without impacting the overall (for example, SgNB Addition) procedure.

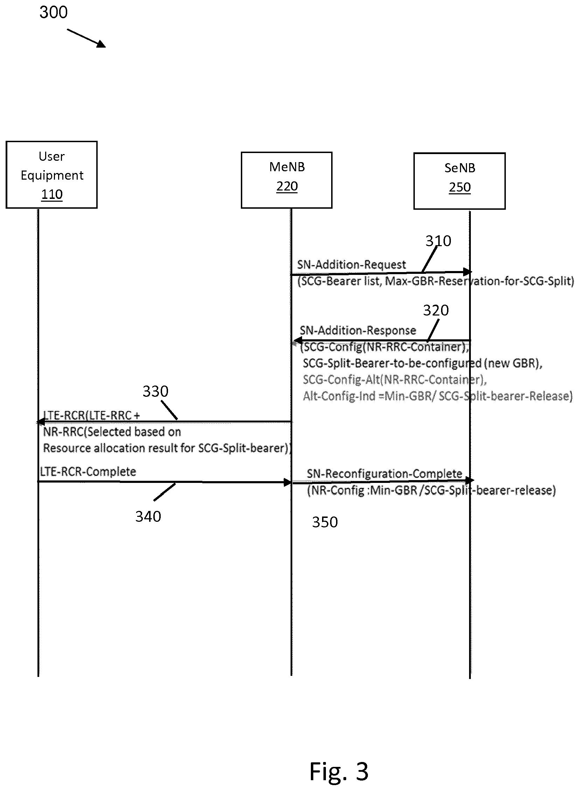

Referring to Fig. 3, an example message sequence 300 for LTE-NR Interworking procedure (for example, an SgNB-Addition Procedure) for SCG Split bearer Configurations is shown. The steps involved in the SgNB-Addition Procedure are as follows.

MeNB 220, signalling (or step) 310, may send SgNB-Addition-Request to SgNB 250 indicating the SCG bearers to be configured in SgNB 250. SgNB-Addition-Request may include the max allowed QoS level (max GBR reservation possible at MeNB for SCG-Split) for SCG Split configuration. MeNB 220 may, in some instances by default, provide a smaller value(s) than MeNB 220 may be able to reserve to allow SgNB 250 to allocate maximum resource for the SCG-Split-bearer.

SgNB 250 may determine (for example, implement a decision) to configure SCG bearer as split bearer. SgNB 250 may send SgNB-Addition-Response, at step 320, which may contain NR-SCG-Config which may contain the SCG-Split bearer configuration, and request for MCG bearer configuration along with its GBR requirements for the split part. This may be in line with the max allowed quality of service (QoS) level, if that was signalled at step 310 (or step 1) (or, it may be provided/accessed as a predetermined "minimum" needed QoS level). SgNB 250 may also include another secondary NR-SCG-Config which may correspond to the optimum configuration.

In instances in which SgNB 250 determines (for example, implements a decision) to release the SCG-Split-bearer if the optimum configuration is not possible, the secondary NR-SCG-Config may correspond to release of the SCG-Split bearer along with other SCG changes accepted as part of SgNB-Addition.

SgNB 250 may include additional parameter in SgNB-Addition-Response indicating the alternative-configuration-type. The parameters may be set to Min-GBR if SgNB 250 is able to maintain the SCG-Split bearer when MeNB 220 allocates only minimum GBR. The parameters may be set to SCG-Split-bearer-release if the SgNB 250 is not able to maintain the SCG-split-bearer if the requested configuration is not possible. The procedures described may also be applied for an SgNB-Modification-Procedure, which may be triggered to add new SCG Split bearer over existing LTE-NR Dual connection.

Signalling 330 may be transmitted from the MeNB 220 to the UE 110, in instances in which MeNB 220 is able to allocate the resource for the MCG part of the split bearer according to the optimum configuration, the MeNB 220 may use the NR-SCG-Config and send it as part of the LTE-RRC message sent to UE 110. The LTE-RRC message may contain LTE-RRC Reconfiguration part which may include dedicated radio bearer (DRB) setup for the MCG part of the split bearer.

In instances in which MeNB 220 is unable to allocate resources for the MCG portion (part) of the split bearer, MeNB 220 may check whether SCG-Split-bearer can be maintained with minimum GBR from MeNB 220.

In these instances MeNB 220 may allocate the minimum GBR for the split bearer and send an LTE RRC message containing LTE-Reconfiguration that may correspond to minimum GBR and NR-RRC container provided in the secondary NR-SCG-Config (message/information).

In instances in which SgNB 250 indicates that the SgNB 250 is unable to maintain the SCG-Split-bearer, for example, if a requested GBR cannot be allocated, MeNB 220 may send an LTE-RRC message that corresponds to release of the SCG-Split-bearer. The LTE-RRC message may carry the NR-RRC container provided in the secondary configuration.

MeNB 220 may inform (send a message to) the SgNB 250 about the allocated MCG part in the SgNB Reconfiguration Complete message. In instances in which the SCG-Split bearer was released as part of SgNB Reconfiguration, this message may indicate that SCG-Split-bearer is released. With use of secondary SCG config which corresponds to failure at MeNB 220 for resource allocation, the MeNB 220 may complete the procedure without need for initiating another new procedure from SgNB.

According to another example, the LTE-NR Interworking procedure for SCG Split bearer Configurations may be applied in instances of SgNB Initiated SgNB-Modification procedures where the modification involves changes to the SCG Split bearer which require additional resource from MeNB 220 for the split bearer. In this instance, SgNB 250 may be the owner for the SgNB modification.

SgNB 250 may send SgNB Modification Request message that may increase the required resources from MeNB 220 for split bearer. This message may also optionally include additional NR-RRC-container which corresponds to release of the SCG bearer.

In instances in which MeNB 220 successfully allocates additional resource for the split bearer, MeNB 220 may send final LTE RRC message to UE 110 containing the main NR-RRC-Container.

In instances in which MeNB 220 cannot allocate resources for additional resource for the split bearer, MeNB 220 may send final LTE RRC message to release the SCG bearer which also includes release of the MCG part of split bearer. MeNB 220 may use the additional NR-RRC Container as NR-RRC part of the RRC message.

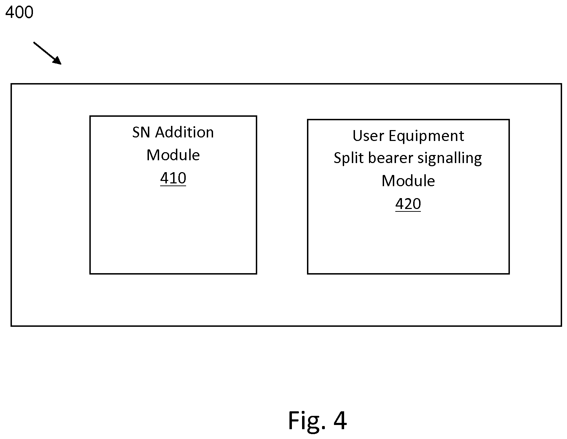

Fig. 4 is a diagram illustrating some components associated with an interworking procedure for SCG Split bearer in a MeNB 220 according to an example. As shown in Fig. 4, MeNB 220 may include an SN Addition module 410 and a user equipment split bearer signalling module 420.

SN addition request module 410 may provide a maximum resource available as an indication in SCG-Addition-Request to SgNB 250, such as described hereinabove with respect to step 310 of Fig. 3. SN addition request module 410 may optionally/alternatively suggest for the split part of GBR in SCG-Addition-Request. SN addition request module 410 may provide the maximum QoS possible (not the actual split) to SgNB 250. This maximum resource may be reserved for a time (for example, of the order of milliseconds, the time that SgNB 250 takes to send a response).

After receipt of a response from SgNB 250, user equipment split bearer signalling module 420 may determine (for example, decide) the split part of GBR, such as described hereinabove with respect to step 330 of Fig. 3, based on whether MeNB 220 is able to allocate the resource for the MCG part of the split bearer according to the optimal configuration. User equipment split bearer signalling module 420 may send an LTE-RRC message to the UE 110 that either contains LTE-Reconfiguration information or releases the split bearer.

MeNB 220 may configure the MCG part of SCG-split bearer as per the latest configuration and release the remaining resources.

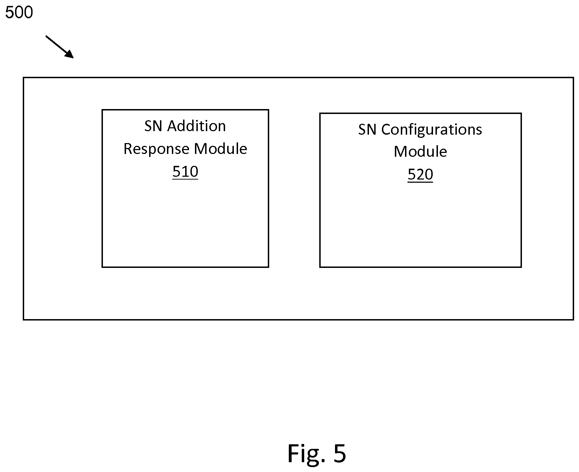

Fig. 5 is a diagram illustrating some components associated with an interworking procedure for SCG Split bearer in a SgNB 250 according to an example. As shown in Fig. 5, SgNB 250 may include an SN addition response module 510 and an SN configurations module 520.

SN addition response module 510 may determine (for example, decide) the split part of GBR in response to an SCG-Addition-Request from MeNB 220. SN addition response module 510 may determine whether to implement the SCG or SCG-split and allocate the maximum resource possible from SCG side for split bearer, such as described with respect to step 320 of Fig. 3 hereinabove.

SN configurations module 520 may determine two (or, in some instances, multiple) SCG configurations and send to the MeNB 220, for the MeNB 220 to select a configuration from for the interworking procedure. If the remaining resources are not available/possible to allocate at MeNB 220, the alternative NR-SCG-Info for release of the bearer may also be included.

SN configurations module 520 may receive the maximum resource available as an indication in SCG-Addition-Request from MeNB 220. SN configurations module 520 may allocate a lesser portion for the MCG Split than what is proposed in the SCG-Addition-Request from MeNB 220. In this case SN addition response module 510 may indicate the actual split when SN addition response module 510 sends a SeNB-Addition-Response to MeNB 220.

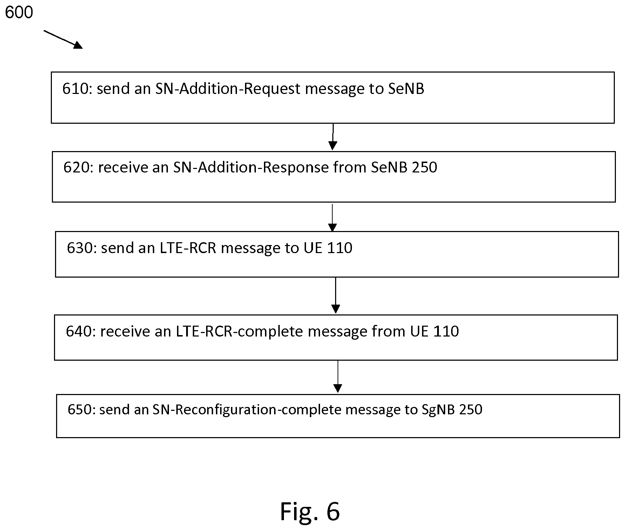

Fig. 6 is an example flow diagram 600 illustrating an LTE-NR Interworking procedure for SCG Split bearer Configurations.

At block 610, MeNB 170 may send an SN-Addition-Request message to SgNB250, for example, as shown at step 310 of signaling diagram 300, illustrated in Fig. 3 and described with regards to hereinabove. The message may include an SCG-bearer list, which may list the SCG bearers, and a Max-GBR-Reservation-for-SCG-Split, which may reserve a maximum GBR for the SCG split.

At block 620, MeNB 170 may receive an SN-Addition-Response from SgNB250, for example as shown at step 320 of Fig. 3. The SN-Addition-Response may include an SCG-Config (NR-RRC-Container) and a SCG-Split-Bearer-to-be-configured (new GBR) message. The SN-Addition-Response may include additional parameters, such as SCG-Config-Alt (NR-RRC-Container) and an Alt-Config-Ind (Min-GBR/SCG-Split-bearer-release), which may indicate the alternative-configuration-type based on whether the SgNB 250 can (or cannot) maintain the SCG-split-bearer.

At block 630, MeNB 170 may send an LTE-RCR message to the UE 110, for example as described with respect to step 330 of Fig. 3. The message may include an NR-RRC message, which may be selected based on resource allocation result of SCG-Split-bearer.

At block 640, MeNB 170 may receive an LTE-RCR-complete message from the UE 110, which may indicate that the RRC connection reconfiguration is complete.

At block 650, MeNB 170 may send an SN-Reconfiguration-complete message to SgNB 250. The SN-Reconfiguration-complete message may include information which may be formatted as NR-Config: Min-GBR /SCG-Split-bearer-release. The NR-Config: Min-GBR /SCG-Split-bearer-release may signal to SgNB 250 that the MeNB cannot allocate resources for additional resources for the split bearer.

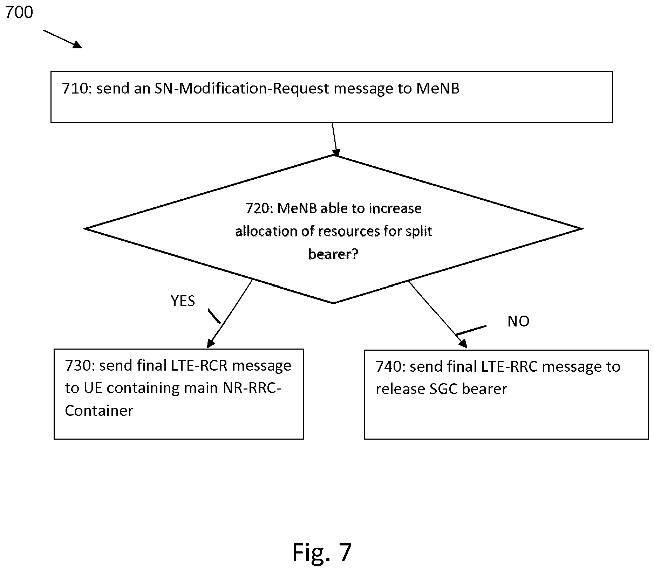

Fig. 7 is an example flow diagram 700 illustrating an LTE-NR Interworking procedure for SCG Split bearer Configurations.

At block 710, SgNB 250 may send an SgNB Modification Request message that for an increase in the allocation of the required resources from MeNB 220 for split bearer. SgNB Modification Request message may optionally include additional NR-RRC-container which corresponds to release of the SCG bearer. This process may be applied in instances of SgNB Initiated SgNB-Modification procedures in which the modification involves changes to the SCG Split bearer which require additional resource from MeNB 220 for the split bearer. In this instance, SgNB 250 may be the owner for the SgNB modification

At block 720, MeNB 220 may determine whether the MeNB 220 is able to provide the increase in the allocation of resources. MeNB 220 may determine an LTE RRC message based on this determination. The LTE RRC message may be configured to be determined based on whether the master node device is able to provide the increase in the allocation of resources.

At block 730, in response to a determination that the MeNB 220 is able to allocate additional resources for the split bearer, MeNB 220 may send final LTE RRC message to UE 110 containing the main NR-RRC-Container.

At block 740, in response to a determination that the MeNB 220 is not able to allocate additional resources for the split bearer, MeNB 220 may send final LTE RRC message to release the SCG bearer which also includes release of the MCG part of split bearer. MeNB 220 may use the additional NR-RRC Container as NR-RRC part of the RRC message.

Without in any way limiting the scope, interpretation, or application of the claims appearing below, a technical effect of one or more of the example embodiments disclosed herein is that the SCG-Split bearer configuration associated with all LTE-DC procedures may be modified to handle the resource allocation failures of SCG-Split bearer without impacting the overall procedure.

An example may provide a method comprising sending, from a master node device, a secondary node (SN)-Addition-Request message to a secondary node device, wherein the SN-Addition-Request message includes a list of secondary cell group (SCG) bearers to be configured, receiving an SN-Addition-Response message based on the SN-Addition-Request message, wherein the SN-Addition-Response message includes at least one configuration for a split bearer and a secondary configuration that corresponds to a release of the split bearer or corresponds with the quality of service (QoS) indicated from a master eNodeB (MeNB) in the secondary node (SN)-Addition Request message. The method also includes determining whether the master node device is able to allocate resources for the at least one configuration for the split bearer, sending, to at least one user equipment, a long term evolution radio resource control (LTE RRC) message based on the determination whether the master node device is able to allocate resources for the least one configuration for the split bearer, and sending an SN reconfiguration complete message to the secondary node device.

In accordance with an example the master node device may comprise a master eNodeB (MeNB) and the secondary node device comprises a secondary gNodeB (SgNB).

In accordance with an embodiment the SN-Addition-Request message may further include a maximum allowed quality of service (QoS) level for the at least one configuration for the split bearer.

In accordance with an example embodiment the SN-Addition-Request message may further include a smaller value of resources than the master node device can reserve as a default option.

In accordance with an example embodiment receiving the SN-Addition-Response message may further comprise receiving a request for a master cell group (MCG) bearer including a guaranteed bit rate (GBR) requirement for the split bearer.

In accordance with an example embodiment receiving the SN-Addition-Response message may further comprise receiving a secondary new radio (NR) SCG configuration that corresponds to an optimum guaranteed bit rate (GBR) configuration.

In accordance with an example embodiment receiving the SN-Addition-Response message may further comprise receiving a secondary new radio (NR) SCG configuration that corresponds to release of the SCG-Split bearer along with other SCG changes accepted as part of SgNB-Addition.

In accordance with an example embodiment receiving the SN-Addition-Response message may further comprise receiving additional parameters in the SN-Addition-Response indicating an alternative-configuration-type to the at least one configuration.

In accordance with an example embodiment the alternative-configuration-type may be set to Min-GBR if the secondary node is able to maintain an SCG-Split bearer when the master node device allocates only minimum guaranteed bit rate (GBR).

In accordance with an example embodiment the alternative-configuration-type may be set to SCG-Split-bearer-release if the secondary node device cannot maintain the SCG-split-bearer if the at least one configuration is not possible.

In accordance with an example embodiment sending the LTE RRC message may further comprise sending a new radio (NR) SCG configuration as part of the LTE-RRC message to the UE if the master node device is able to allocate the resource for an MCG portion of the split bearer according to the at least one configuration, wherein the LTE RRC message contains an LTE RRC reconfiguration part that includes dedicated radio bearer (DRB) setup for the MCG portion of the split bearer.

In accordance with an example embodiment sending the LTE RRC message may further comprise determining whether an SCG-Split-bearer can be maintained with a minimum GBR from the master node device if the master node device is not able to allocate resources for a master cell group (MCG) part of the split bearer; and allocating the minimum GBR for the split bearer in response to a determination that the SCG-Split-bearer can be maintained with the minimum GBR.

An example embodiment may be provided in an apparatus comprising at least one processor; and at least one non-transitory memory including computer program code, the at least one non-transitory memory and the computer program code may be configured to, with the at least one processor, cause the apparatus to: receive, from a master node device, a secondary node (SN)-Addition-Request message, wherein the SN-Addition-Request message includes a list of secondary cell group (SCG) bearers to be configured in the apparatus, send, to the master node device, an SN-Addition-Response message based on the SN-Addition-Request message, wherein the SN-Addition-Response message includes at least one configuration for a split bearer and a secondary configuration that corresponds to a release of the split bearer or corresponds with the quality of service (QoS) indicated from a master eNodeB (MeNB) in the secondary node (SN)-Addition Request message; and receive an SN reconfiguration complete message from the master node device.

An example embodiment may be provided in an apparatus comprising at least one processor; and at least one non-transitory memory including computer program code, the at least one non-transitory memory and the computer program code may be configured to, with the at least one processor, cause the apparatus to: send a secondary node (SN)-Addition-Request message to a secondary node device, wherein the SN-Addition-Request message includes a list of secondary cell group (SCG) bearers to be configured in the secondary node device, receive, from the secondary node device, an SN-Addition-Response message based on the SN-Addition-Request message, wherein the SN-Addition-Response message includes at least one configuration for a split bearer and a secondary configuration that corresponds to a release of the split bearer or corresponds with the quality of service (QoS) indicated from a master eNodeB (MeNB) in the secondary node (SN)-Addition Request message, determine whether the apparatus is able to allocate resources for the at least one configuration for the split bearer, send, to at least one user equipment, a long term evolution radio resource control (LTE RRC) message based on the determination whether the apparatus is able to allocate resources for the least one configuration for the split bearer, and send an SN reconfiguration complete message to the secondary node device.

In accordance with an example embodiment the apparatus may comprise a master eNodeB (MeNB) and the secondary node device comprises a secondary gNodeB (SgNB).

In accordance with an example embodiment the SN-Addition-Request message may further include a maximum allowed quality of service (QoS) level for the at least one configuration for the split bearer.

In accordance with an example embodiment the SN-Addition-Request message may further include a smaller value of resources than the master node device can reserve as a default option.

In accordance with an example embodiment when receiving the SN-Addition-Response message, the at least one non-transitory memory and the computer program code may be configured to, with the at least one processor, cause the apparatus to receive a request for a master cell group (MCG) bearer including a guaranteed bit rate (GBR) requirement for the split bearer.

In accordance with an example embodiment when receiving the SN-Addition-Response message, the at least one non-transitory memory and the computer program code may be configured to, with the at least one processor, cause the apparatus to receive a secondary new radio (NR) SCG configuration that corresponds to an optimal configuration.

In accordance with an example embodiment non-transitory computer program product comprising a computer-readable medium bearing computer program code embodied therein for use with a computer, the computer program code comprising code that may be implemented for sending, from a master node device, a secondary node (SN)-Addition-Request message to a secondary node device, wherein the SN-Addition-Request message includes a list of secondary cell group (SCG) bearers to be configured, receiving an SN-Addition-Response message based on the SN-Addition-Request message, wherein the SN-Addition-Response message includes at least one configuration for a split bearer and a secondary configuration that corresponds to a release of the split bearer or corresponds with the quality of service (QoS) indicated from a master eNodeB (MeNB) in the secondary node (SN)-Addition Request message. The method also includes determining whether the master node device is able to allocate resources for the at least one configuration for the split bearer, sending, to at least one user equipment, a long term evolution radio resource control (LTE RRC) message based on the determination whether the master node device is able to allocate resources for the least one configuration for the split bearer, and sending an SN reconfiguration complete message to the secondary node device.

In accordance with another example, an example apparatus comprises: means for sending, from a master node device, a secondary node (SN)-Addition-Request message to a secondary node device, wherein the SN-Addition-Request message includes a list of secondary cell group (SCG) bearers to be configured, means for receiving an SN-Addition-Response message based on the SN-Addition-Request message, wherein the SN-Addition-Response message includes at least one configuration for a split bearer and a secondary configuration that corresponds to a release of the split bearer or corresponds with the quality of service (QoS) indicated from a master eNodeB (MeNB) in the secondary node (SN)-Addition Request message. The apparatus also includes means for determining whether the master node device is able to allocate resources for the at least one configuration for the split bearer, means for sending, to at least one user equipment, a long term evolution radio resource control (LTE RRC) message based on the determination whether the master node device is able to allocate resources for the least one configuration for the split bearer, and means for sending an SN reconfiguration complete message to the secondary node device.

An example embodiment may provide a method comprising receiving, from a master node device at a secondary node device, a secondary node (SN)-Addition-Request message, wherein the SN-Addition-Request message includes a list of secondary cell group (SCG) bearers to be configured in the apparatus, sending, to the master node device, an SN-Addition-Response message based on the SN-Addition-Request message, wherein the SN-Addition-Response message includes at least one configuration for a split bearer and a secondary configuration that corresponds to a release of the split bearer or corresponds with the quality of service (QoS) indicated from a master eNodeB (MeNB) in the secondary node (SN)-Addition Request message, and receiving an SN reconfiguration complete message from the master node device.

In accordance with another example, sending, from the secondary node device to the master node device, a SN-Modification-Request message, wherein the SN-Modification-Request message requests an increase in allocation of resources at the master node device for the split bearer, and receiving, from the master node device, a final long term evolution radio resource control (LTE RRC) message, wherein the LTE RRC message is configured to be determined based on whether the master node device is able to provide the increase in the allocation of resources.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in Fig. 1. A computer-readable medium may comprise a computer-readable storage medium (e.g., memories 125, 155, 171 or other device) that may be any media or means that can contain, store, and/or transport the instructions for use by or in connection with an instruction execution system, apparatus, or device, such as a computer. A computer-readable storage medium does not comprise propagating signals.

If desired, the different functions discussed herein may be performed in a different order and/or concurrently with each other. Furthermore, if desired, one or more of the above-described functions may be optional or may be combined.

Although various aspects are set out above, other aspects comprise other combinations of features from the described embodiments, and not solely the combinations described above.

It is also noted herein that while the above describes example embodiments, these descriptions should not be viewed in a limiting sense. Rather, there are several variations and modifications which may be made without departing from the scope of the present invention.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications which may be made without departing from the scope of the present invention as defined in the appended claims.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarilyto be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of example and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. A method, comprising:
sending (310), from a master node device (220), a secondary node, SN,-Addition-Request message to a secondary node device (250), wherein the SN-Addition-Request message includes a list of secondary cell group, SCG, bearers to be configured in the secondary node device and a maximum allowed quality of service, QoS, level for at least one configuration for a split bearer;
receiving (320), at the master node device (220) from the secondary node device (250), an SN-Addition-Response message based on the SN-Addition-Request message, wherein the SN-Addition-Response message includes at least one configuration for the_split bearer and a secondary configuration that corresponds to at least one of a release of the split bearer and a configuration with a suggested quality of service, QoS, level;
determining whether the master node device (220) is able to allocate resources for the at least one configuration for the split bearer;
sending (330), to at least one user equipment (110), a long term evolution radio resource control, LTE RRC, message based on the determination whether the master node device is able to allocate resources for the at least one configuration for the split bearer; and
sending (350) an SN reconfiguration complete message to the secondary node device (250).

2. The method of claim 1, wherein the master node device (220) comprises a master eNode B, MeNB, and the secondary node device (250) comprises a secondary gNodeB, SgNB.

3. The method of claim 1, wherein the SN-Addition-Request message further includes a smaller value of resources than the master node device (220) can reserve as a default option.

4. The method of claim 1, wherein receiving the SN-Addition-Response message further comprises:
receiving a request for a master cell group, MCG, bearer including a guaranteed bit rate, GBR, requirement for the split bearer.

5. The method of claim 1, wherein receiving the SN-Addition-Response message further comprises:
receiving a secondary new radio, NR, secondary cell group, SCG, configuration that corresponds to an optimum configuration.

6. The method of claim 1, wherein receiving the SN-Addition-Response message further comprises:
receiving a secondary new radio, NR, secondary cell group, SCG, configuration that corresponds to release of an SCG-Split bearer along with other secondary cell group, SCG, changes accepted as part of secondary gNodeB, SgNB, - Addition.

7. The method of claim 1, wherein receiving the SN-Addition-Response message further comprises:
receiving additional parameters in the SN-Addition-Response indicating an alternative-configuration-type to the at least one configuration.

8. The method of claim 7, wherein the alternative-configuration-type is set to minimum guaranteed bit rate, Min-GBR, if the secondary node is able to maintain an SCG-Split bearer when the master node device allocates only minimum guaranteed bit rate, GBR.

9. The method of claim 7, wherein the alternative-configuration-type is set to SCG-Split-bearer-release if the secondary node device cannot maintain the SCG-split-bearer if the at least one configuration is not possible.

10. The method of claim 1, wherein sending the LTE RRC message further comprises:
sending a new radio, NR, SCG configuration as part of the LTE-RRC message to the UE if the master node device is able to allocate a resource for a master cell group, MCG, portion of the split bearer according to the at least one configuration, wherein the LTE RRC message contains an LTE RRC reconfiguration part that includes dedicated radio bearer, DRB, setup for the master cell group, MCG, portion of the split bearer.

11. The method of claim 1, wherein sending the LTE RRC message further comprises:
determining whether an SCG-Split-bearer can be maintained with a minimum guaranteed bit rate, GBR, from the master node device if the master node device is not able to allocate resources for a master cell group, MCG, part of the split bearer; and
allocating the minimum GBR for the split bearer in response to a determination that the SCG-Split-bearer can be maintained with the minimum GBR.

12. An apparatus (170), comprising:
at least one processor (152); and
at least one non-transitory memory (155) including computer program code,
the at least one non-transitory memory (155) and the computer program code configured to, with the at least one processor (152), cause the apparatus (170) to perform at least the following:
send a secondary node, SN,-Addition-Request message to a secondary node device (250), wherein the SN-Addition-Request message includes a list of secondary cell group, SCG, bearers to be configured in the secondary node device (250) and a maximum allowed quality of service, QoS, level for at least one configuration for a split bearer;
receive, from the secondary node device (250), an SN-Addition-Response message based on the SN-Addition-Request message, wherein the SN-Addition-Response message includes at least one configuration for the split bearer and a secondary configuration that corresponds to at least one of a release of the split bearer and a configuration with a suggested quality of service, QoS, level;
determine whether the apparatus is able to allocate resources for the at least one configuration for the split bearer;
send, to at least one user equipment (110), a long term evolution radio resource control, LTE RRC, message based on the determination whether the apparatus is able to allocate resources for the at least one configuration for the split bearer; and
send a secondary node, SN, reconfiguration complete message to the secondary node device (250).

13. The apparatus (170) of claim 12, wherein the apparatus comprises a master eNode B, MeNB, (220) and the secondary node device comprises a secondary gNodeB, SgNB, (250).

14. A method, comprising:
receiving (610), from a master node device at a secondary node device, a secondary node, SN,-Addition-Request message, wherein the SN-Addition-Request message includes a list of secondary cell group, SCG, bearers to be configured in the apparatus and a maximum allowed quality of service, QoS, level for at least one configuration for a split bearer;
sending (620), to the master node device, an SN-Addition-Response message based on the SN-Addition-Request message, wherein the SN-Addition-Response message includes at least one configuration for the split bearer and a secondary configuration that corresponds to a release of the split bearer; and
receiving (650) an SN reconfiguration complete message from the master node device.

15. An apparatus (170), comprising:
at least one processor (152); and
at least one non-transitory memory (155) including computer program code,
the at least one non-transitory memory (155) and the computer program code configured to, with the at least one processor (152), cause the apparatus to perform at least the following:
receive, from a master node device (220), a secondary node, SN,-Addition-Request message, wherein the SN-Addition-Request message includes a list of secondary cell group, SCG, bearers to be configured in the apparatus and a maximum allowed quality of service, QoS, level for at least one configuration for a split bearer;
send, to the master node device (220), an SN-Addition-Response message based on the SN-Addition-Request message, wherein the SN-Addition-Response message includes at least one configuration for the split bearer and a secondary configuration that corresponds to a release of the split bearer; and
receive a secondary node, SN, reconfiguration complete message from the master node device (220).

## Patentansprüche

1. Verfahren, umfassend:
von einer Masterknoten-Einrichtung (220) aus erfolgendes Senden (310) einer Sekundärknoten-, SN- (Secondary Node),
Hinzufügungsanfragenachricht an eine Sekundärknoten-Einrichtung (250), wobei die SN-Hinzufügungsanfragenachricht eine Liste in der Sekundärknoten-Einrichtung zu konfigurierender Sekundärzellengruppen-, SCG- (Secondary Cell Group),
Träger und einen maximal erlaubten Dienstgüte-, QoS-(Quality of Service), Grad für mindestens eine Konfiguration für einen geteilten Träger beinhaltet,
an der Masterknoten-Einrichtung (220) erfolgendes Empfangen (320) einer SN-Hinzufügungsantwortnachricht von der Sekundärknoten-Einrichtung (250) auf Grundlage der SN-Hinzufügungsanfragenachricht, wobei die SN-Hinzufügungsantwortnachricht mindestens eine Konfiguration für den geteilten Träger und eine Sekundärkonfiguration beinhaltet, die einer Freigabe des geteilten Trägers und/oder einer Konfiguration mit einem vorgeschlagenen Dienstgüte-, QoS-, Grad entspricht, Bestimmen, ob die Masterknoten-Einrichtung (220) in der Lage ist, Ressourcen für die mindestens eine Konfiguration für den geteilten Träger zuzuteilen,
Senden (330) einer Long-Term-Evolution-Funkressourcensteuerungs-, LTE-RRC- (Long Term Evolution Radio Resource Control), Nachricht an mindestens ein Nutzergerät (110) auf Grundlage der Bestimmung, ob die Masterknoten-Einrichtung in der Lage ist, Ressourcen für die mindestens eine Konfiguration für den geteilten Träger zuzuteilen, und
Senden (350) einer SN-Neukonfigurationsabschlussnachricht an die Sekundärknoten-Einrichtung (250).

2. Verfahren nach Anspruch 1, wobei die Masterknoten-Einrichtung (220) einen Master-eNode B, MeNB, umfasst und die Sekundärknoten-Einrichtung (250) einen Sekundär-gNodeB, SgNB, umfasst.

3. Verfahren nach Anspruch 1, wobei die SN-Hinzufügungsanfragenachricht ferner als Standardoption einen kleineren Ressourcenwert beinhaltet, als die Masterknoten-Einrichtung (220) reservieren kann.

4. Verfahren nach Anspruch 1, wobei das Empfangen der SN-Hinzufügungsantwortnachricht ferner Folgendes umfasst: Empfangen einer Anfrage nach einem Masterzellengruppen-, MCG- (Master Cell Group), Träger, die eine garantierte Bitraten-, GBR-, Anforderung für den geteilten Träger beinhaltet.

5. Verfahren nach Anspruch 1, wobei das Empfangen der SN-Hinzufügungsantwortnachricht ferner Folgendes umfasst: Empfangen einer Sekundär-Neufunk-, NR- (New Radio), Sekundärzellengruppen-, SCG-, Konfiguration, die einer optimalen Konfiguration entspricht.

6. Verfahren nach Anspruch 1, wobei das Empfangen der SN-Hinzufügungsantwortnachricht ferner Folgendes umfasst: Empfangen einer Sekundär-Neufunk-, NR-, Sekundärzellengruppen-, SCG-, Konfiguration, die einer Freigabe eines geteilten SCG-Trägers zusammen mit anderen als Teil einer Sekundär-gNodeB-, SgNB-, Hinzufügung akzeptierten Sekundärzellengruppen-, SCG-, Änderungen entspricht.

7. Verfahren nach Anspruch 1, wobei das Empfangen der SN-Hinzufügungsantwortnachricht ferner Folgendes umfasst:
Empfangen zusätzlicher Parameter in der SN-Hinzufügungsantwort, die einen Alternativkonfigurationstyp zu der mindestens einen Konfiguration anzeigen.

8. Verfahren nach Anspruch 7, wobei der Alternativkonfigurationstyp auf minimale garantierte Bitrate, Min-GBR, eingestellt wird, falls der Sekundärknoten in der Lage ist, einen geteilten SCG-Träger aufrechtzuerhalten, wenn die Masterknoten-Einrichtung nur eine minimale garantierte Bitrate, GBR, zuteilt.

9. Verfahren nach Anspruch 7, wobei der Alternativkonfigurationstyp auf Freigabe des geteilten SCG-Trägers eingestellt wird, falls die Sekundärknoten-Einrichtung den geteilten SCG-Träger nicht aufrechterhalten kann, falls die mindestens eine Konfiguration nicht möglich ist.

10. Verfahren nach Anspruch 1, wobei das Senden der LTE-RRC-Nachricht ferner Folgendes umfasst:
Senden einer Neufunk-, NR-, SCG-Konfiguration als Teil der LTE-RRC-Nachricht an das UE, falls die Masterknoten-Einrichtung in der Lage ist, eine Ressource für einen Masterzellengruppen-, MCG-, Abschnitt des geteilten Trägers gemäß der mindestens einen Konfiguration zuzuteilen, wobei die LTE-RRC-Nachricht einen LTE-RRC-Neukonfigurationsteil enthält, der Einstellungen für dedizierte Funkträger, DRB, für den Masterzellengruppen-, MCG-, Abschnitt des geteilten Trägers beinhaltet.

11. Verfahren nach Anspruch 1, wobei das Senden der LTE-RRC-Nachricht ferner Folgendes umfasst:
Bestimmen, ob ein geteilter SCG-Träger mit einer minimalen garantierten Bitrate, GBR, von der Masterknoten-Einrichtung aufrechterhalten werden kann, falls die Masterknoten-Einrichtung nicht in der Lage ist,
Ressourcen für einen Masterzellengruppen-, MCG-, Teil des geteilten Trägers zuzuteilen, und
Zuteilen der minimalen GBR für den geteilten Träger in Reaktion auf eine Bestimmung, dass der geteilte SCG-Träger mit der minimalen GBR aufrechterhalten werden kann.

12. Vorrichtung (170), umfassend:
mindestens einen Prozessor (152) und
mindestens einen nichtflüchtigen Speicher (155), der Computerprogrammcode beinhaltet,
wobei der mindestens eine nichtflüchtige Speicher (155) und der Computerprogrammcode dafür konfiguriert sind, mit dem mindestens einen Prozessor (152) die Vorrichtung (170) zu veranlassen, zumindest Folgendes durchzuführen:
eine Sekundärknoten-, SN-, Hinzufügungsanfragenachricht an eine Sekundärknoten-Einrichtung (250) zu senden, wobei die SN-Hinzufügungsanfragenachricht eine Liste in der Sekundärknoten-Einrichtung (250) zu konfigurierender Sekundärzellengruppen-, SCG-, Träger und einen maximal erlaubten Dienstgüte-, QoS-, Grad für mindestens eine Konfiguration für einen geteilten Träger beinhaltet,
von der Sekundärknoten-Einrichtung (250) eine SN-Hinzufügungsantwortnachricht auf Grundlage der SN-Hinzufügungsanfragenachricht zu empfangen, wobei die SN-Hinzufügungsantwortnachricht mindestens eine Konfiguration für den geteilten Träger und eine Sekundärkonfiguration beinhaltet, die einer Freigabe des geteilten Trägers und/oder einer Konfiguration mit einem vorgeschlagenen Dienstgüte-, QoS-, Grad entspricht,
zu bestimmen, ob die Vorrichtung in der Lage ist, Ressourcen für die mindestens eine Konfiguration für den geteilten Träger zuzuteilen,
auf Grundlage der Bestimmung, ob die Vorrichtung in der Lage ist, Ressourcen für die mindestens eine Konfiguration für den geteilten Träger zuzuteilen, eine Long-Term-Evolution-Funkressourcensteuerungs-, LTE-RRC-, Nachricht an mindestens ein Nutzergerät (110) zu senden und
eine Sekundärknoten-, SN-, Neukonfigurationsabschlussnachricht an die Sekundärknoten-Einrichtung (250) zu senden.

13. Vorrichtung (170) nach Anspruch 12, wobei die Vorrichtung einen Master-eNode B, MeNB, (220) umfasst und die Sekundärknoten-Einrichtung einen Sekundär-gNodeB, SgNB, (250) umfasst.

14. Verfahren, umfassend:
an einer Sekundärknoten-Einrichtung erfolgendes Empfangen (610) einer Sekundärknoten-, SN-,
Hinzufügungsanfragenachricht von einer Masterknoten-Einrichtung, wobei die SN-Hinzufügungsanfragenachricht eine Liste in der Vorrichtung zu konfigurierender Sekundärzellengruppen-, SCG-, Träger und einen maximal erlaubten Dienstgüte-, QoS-, Grad für mindestens eine Konfiguration für einen geteilten Träger beinhaltet,
Senden (620) einer SN-Hinzufügungsantwortnachricht an die Masterknoten-Einrichtung auf Grundlage der SN-Hinzufügungsanfragenachricht, wobei die SN-Hinzufügungsantwortnachricht mindestens eine Konfiguration für den geteilten Träger und eine Sekundärkonfiguration beinhaltet, die einer Freigabe des geteilten Trägers entspricht, und
Empfangen (650) einer SN-Neukonfigurationsabschlussnachricht von der Masterknoten-Einrichtung.

15. Vorrichtung (170) umfassend:
mindestens einen Prozessor (152) und
mindestens einen nichtflüchtigen Speicher (155), der Computerprogrammcode beinhaltet,
wobei der mindestens eine nichtflüchtige Speicher (155) und der Computerprogrammcode dafür konfiguriert sind, mit dem mindestens einen Prozessor (152) die Vorrichtung zu veranlassen, zumindest Folgendes durchzuführen:
von einer Masterknoten-Einrichtung (220) eine Sekundärknoten-, SN-, Hinzufügungsanfragenachricht zu empfangen, wobei die SN-Hinzufügungsanfragenachricht eine Liste in der Vorrichtung zu konfigurierender Sekundärzellengruppen-, SCG-, Träger und einen maximal erlaubten Dienstgüte-, QoS-, Grad für mindestens eine Konfiguration für einen geteilten Träger beinhaltet,
an die Masterknoten-Einrichtung (220) eine SN-Hinzufügungsantwortnachricht auf Grundlage der SN-Hinzufügungsanfragenachricht zu senden, wobei die SN-Hinzufügungsantwortnachricht mindestens eine Konfiguration für den geteilten Träger und eine Sekundärkonfiguration beinhaltet, die einer Freigabe des geteilten Trägers entspricht, und
eine Sekundärknoten-, SN-, Neukonfigurationsabschlussnachricht von der Masterknoten-Einrichtung (220) zu empfangen.

## Revendications

1. Procédé comprenant les étapes consistant à :
envoyer (310), depuis un dispositif nœud maître (220), un message de demande d'ajout de nœud secondaire, SN, à un dispositif nœud secondaire (250), le message de demande d'ajout de SN incluant une liste de porteuses de groupe de cellules secondaires, SCG, qui doivent être configurées dans le dispositif nœud secondaire et un niveau de qualité de service, QoS, autorisé maximum pour au moins une configuration pour une porteuse partagée ;
recevoir (320), au niveau du dispositif nœud maître (220) en provenance du dispositif nœud secondaire (250), un message de réponse d'ajout de SN sur la base du message de demande d'ajout de SN, le message de réponse d'ajout de SN incluant au moins une configuration pour la porteuse partagée et une configuration secondaire qui correspond à une libération de la porteuse partagée et/ou à une configuration avec un niveau de qualité de service, QoS, suggéré ;
déterminer si le dispositif nœud maître (220) peut affecter des ressources pour l'au moins une configuration pour la porteuse partagée ;
envoyer (330), à au moins un équipement d'utilisateur (110), un message de contrôle des ressources radio d'évolution à long terme, LTE-RRC, sur la base de la détermination de si le dispositif nœud maître peut affecter des ressources pour l'au moins une configuration pour la porteuse partagée ; et
envoyer (350) un message d'achèvement de reconfiguration de SN au dispositif nœud secondaire (250).

2. Procédé selon la revendication 1, dans lequel le dispositif nœud maître (220) comprend un eNode B maître, MeNB, et le dispositif nœud secondaire (250) comprend un gNodeB secondaire, SgNB.

3. Procédé selon la revendication 1, dans lequel le message de demande d'ajout de SN inclut en outre, comme option par défaut, une valeur de ressources plus petite que celle que le dispositif nœud maître (220) peut réserver.

4. Procédé selon la revendication 1, dans lequel la réception du message de réponse d'ajout de SN comprend en outre l'étape consistant à :
recevoir une demande concernant une porteuse de groupe de cellules maîtresses, MCG, incluant une exigence de débit binaire garanti, GBR, pour la porteuse partagée.

5. Procédé selon la revendication 1, dans lequel la réception du message de réponse d'ajout de SN comprend en outre l'étape consistant à :
recevoir une configuration secondaire de groupe de cellules secondaires, SCG, en nouvelle radio, NR, qui correspond à une configuration optimale.

6. Procédé selon la revendication 1, dans lequel la réception du message de réponse d'ajout de SN comprend en outre l'étape consistant à :
recevoir une configuration secondaire de groupe de cellules secondaires, SCG, en nouvelle radio, NR, qui correspond pour libérer une porteuse partagée de SCG conjointement avec d'autres changements de groupe de cellules secondaires, SCG, acceptés dans le cadre d'un ajout de gNodeB secondaire, SgNB.

7. Procédé selon la revendication 1, dans lequel la réception du message de réponse d'ajout de SN comprend en outre l'étape consistant à :
recevoir des paramètres supplémentaires dans la réponse d'ajout de SN, indiquant un type de configuration alternative à l'au moins une configuration.

8. Procédé selon la revendication 7, dans lequel le type de configuration alternative est fixé sur un débit binaire garanti minimum, Min-GBR, si le nœud secondaire peut maintenir une porteuse partagée de SCG quand le dispositif nœud maître affecte uniquement un débit garanti, GBR, minimum.

9. Procédé selon la revendication 7, dans lequel le type de configuration alternative est fixé sur une libération de porteuse partagée de SCG si le dispositif nœud secondaire ne peut pas maintenir la porteuse partagée de SCG si l'au moins une configuration n'est pas possible.

10. Procédé selon la revendication 1, dans lequel l'envoi du message LTE-RRC comprend en outre l'étape consistant à :
envoyer à l'UE une configuration SCG en nouvelle radio dans le cadre du message LTE-RRC si le dispositif nœud maître peut affecter une ressource pour une partie de groupe de cellules maîtresses, MCG, de la porteuse partagée selon l'au moins une configuration, le message LTE-RRC contenant une partie de reconfiguration LTE-RRC qui inclut un établissement de porteuse radio dédiée, DRB, pour la partie de groupe de cellules maîtresses, MCG, de la porteuse partagée.

11. Procédé selon la revendication 1, dans lequel l'envoi du message LTE-RRC comprend en outre l'étape consistant à :
déterminer si une porteuse partagée de SCG peut être maintenue avec un débit binaire garanti, GBR, à partir du dispositif nœud maître si le dispositif nœud maître ne peut pas affecter de ressources pour une partie de groupe de cellules maîtresses, MCG, de la porteuse partagée ; et
affecter le GBR minimum pour la porteuse partagée en réponse à une détermination du fait que la porteuse partagée de SCG peut être maintenue avec le GBR minimum.

12. Appareil (170), comprenant :
au moins un processeur (152) ; et
au moins une mémoire non temporaire (155) comprenant un code de programme informatique, l'au moins une mémoire non temporaire (155) et le code de programme informatique étant configurés pour, avec l'au moins un processeur (152), amener l'appareil (170) à réaliser au moins les étapes suivantes consistant à :
envoyer un message de demande d'ajout de nœud secondaire (SN) à un dispositif nœud secondaire (250), le message de demande d'ajout de SN incluant une liste de porteuses de groupe de cellules secondaires (SCG) qui doivent être configurées dans le dispositif nœud secondaire (250) et un niveau de qualité de service (QoS) autorisé maximum pour au moins une configuration pour une porteuse partagée ;
recevoir, en provenance du dispositif nœud secondaire (250), un message de réponse d'ajout de SN sur la base du message de demande d'ajout de SN, le message de réponse d'ajout de SN incluant au moins une configuration pour la porteuse partagée et une configuration secondaire qui correspond à une libération de la porteuse partagée et/ou à une configuration avec un niveau de qualité de service, QoS, suggéré ;
déterminer si l'appareil peut affecter des ressources pour l'au moins une configuration pour la porteuse partagée ;
envoyer, à au moins un équipement d'utilisateur (110), un message de contrôle des ressources radio d'évolution à long terme, LTE-RRC, sur la base de la détermination de si l'appareil peut affecter des ressources pour l'au moins une configuration pour la porteuse partagée ; et
envoyer un message d'achèvement de reconfiguration de nœud secondaire, SN, au dispositif nœud secondaire (250).

13. Appareil (170) selon la revendication 12, l'appareil comprenant un eNode B maître, MeNB, (220) et le dispositif nœud secondaire comprenant un gNodeB secondaire, SgNB (250).

14. Procédé comprenant les étapes consistant à :
recevoir (610), en provenance d'un dispositif nœud maître au niveau d'un dispositif nœud secondaire, un message de demande d'ajout de nœud secondaire, SN, le message de demande d'ajout de SN incluant une liste de porteuses de groupe de cellules secondaires, SCG, qui doivent être configurées dans l'appareil et un niveau de qualité de service, QoS, autorisé maximum pour au moins une configuration pour une porteuse partagée ;
envoyer (620), au dispositif nœud maître, un message de réponse d'ajout de SN sur la base du message de demande d'ajout de SN, le message de réponse d'ajout de SN incluant au moins une configuration pour la porteuse partagée et une configuration secondaire qui correspond à une libération de la porteuse partagée ; et
recevoir (650) un message d'achèvement de reconfiguration de SN en provenance du dispositif nœud maître.

15. Appareil (170), comprenant :
au moins un processeur (152) ; et
au moins une mémoire non temporaire (155) comprenant un code de programme informatique,
l'au moins une mémoire non temporaire (155) et le code de programme informatique étant configurés pour, avec l'au moins un processeur (152), amener l'appareil à réaliser au moins les étapes suivantes consistant à :
recevoir, en provenance d'un dispositif nœud maître (220), un message de demande d'ajout de nœud secondaire, SN, le message de demande d'ajout de SN incluant une liste de porteuses de groupe de cellules secondaires, SCG, qui doivent être configurées dans l'appareil et un niveau de qualité de service, QoS, autorisé maximum pour au moins une configuration pour une porteuse partagée ;
envoyer, au dispositif nœud maître (220), un message de réponse d'ajout de SN sur la base du message de demande d'ajout de SN, le message de réponse d'ajout de SN incluant au moins une configuration pour la porteuse partagée et une configuration secondaire qui correspond à une libération de la porteuse partagée ; et
recevoir un message d'achèvement de reconfiguration de nœud secondaire, SN, en provenance du dispositif nœud maître (220).
